(19) Europäisches Patentamt
European Patent Office
Office européen des brevets

(11) **EP 4 153 653 B1**

(12) **EUROPÄISCHE PATENTSCHRIFT**

(45) Veröffentlichungstag und Bekanntmachung des Hinweises auf die Patenterteilung:
**18.10.2023 Patentblatt 2023/42**

(21) Anmeldenummer: **20726830.1**

(22) Anmeldetag: **20.05.2020**

(51) Internationale Patentklassifikation (IPC):
**C08G 63/672** (2006.01) **C08G 63/676** (2006.01)
**C09D 167/02** (2006.01) **C09D 167/06** (2006.01)
**C09J 167/02** (2006.01) **C09J 167/06** (2006.01)
**C09D 5/02** (2006.01)

(52) Gemeinsame Patentklassifikation (CPC):
**C08G 63/672; C08G 63/676; C09D 5/02; C09D 167/025; C09D 167/06; C09J 167/025; C09J 167/06**

(86) Internationale Anmeldenummer:
**PCT/EP2020/064051**

(87) Internationale Veröffentlichungsnummer:
**WO 2021/233535 (25.11.2021 Gazette 2021/47)**

(54) **WÄSSRIGE DISPERSION BIOLOGISCH ABBAUBARER POLYESTER**

AQUEOUS DISPERSION OF BIOLOGICALLY DEGRADABLE POLYESTERS

DISPERSION AQUEUSE DE POLYESTERS BIODÉGRADABLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.03.2023 Patentblatt 2023/13**

(73) Patentinhaber: **Wacker Chemie AG**
**81737 München (DE)**

(72) Erfinder:
• **WÖLFLE, Heimo**
**83278 Traunstein (DE)**
• **WEBER, Karl**
**84508 Burgkirchen (DE)**

(74) Vertreter: **Ege, Markus et al**
**Wacker Chemie AG**
**Hanns-Seidel-Platz 4**
**81737 München (DE)**

(56) Entgegenhaltungen:
EP-A1- 1 302 502 WO-A1-2013/042677
US-A1- 2017 247 537

**Beschreibung**

Die Erfindung betrifft eine wässrige Dispersion biologisch abbaubarer Polyester, ein Verfahren zu deren Herstellung und deren Verwendung.

Ein zunehmendes ökologisches Bewusstsein der Verbraucher von Konsumgütern, aber auch die Kosten und ökologischen Probleme, welche mit der Sonderlagerung von Abfällen verbunden sind, führen zu einer gesteigerten Nachfrage der Hersteller von Dispersionsfarben, von Klebstoffen, Papier- oder Kartonageartikel oder von Nonwoven-Artikeln nach biologisch abbaubaren Polymerisaten in Form deren wässrigen Polymerdispersionen, welche in den genannten Produktklassen die herkömmlichen wässrigen Bindemittel auf Basis von biologisch nicht abbaubaren Polymeren ersetzen sollen.

In der industriell verfügbaren Auswahl an biologisch abbaubaren Kunststoffen, nehmen die Polyester und da speziell Polymilchsäure, Polycaprolacton, Polyhydroxyalkanoate wie Polyhydroxybuttersäure (PHB) oder Polyhydroxyvaleriansäure (PHV), Polybutylenterephtalat-co-adibat (PBAT) sowie Polybutylensuccinat (PBS) und der damit verwandte Polyester Polybutylensuccinat-co-adipat (PBSA) eine gewisse Sonderstellung ein. Diese Substanzklassen sind kompostierbar nach DIN EN 13432:2000, hydrophob, hart und zäh, thermisch gut verarbeitbar, chemisch stabil und kommerziell in industriellem Maßstab sowohl aus petrochemischen als teilweise auch aus nachwachsenden Rohstoffen verfügbar.

Problematisch ist allerdings die Verwendung der genannten biologisch abbaubaren Polyester in Anwendungen, die den Einsatz wässriger Polymerdispersionen verlangen, da sowohl der relativ hohe Schmelzflußindex als auch die hydrophobe Natur der Polyester die Herstellung wässriger Dispersionen, beispielsweise durch Scherung der Schmelze in eine Lösung, die oberflächenaktive Substanzen enthält, schwierig bis unmöglich macht.

Darüber hinaus ist das Vorhandensein von freiem Emulgator in der Dispersion für viele Anwendungen störend. Ein solches Verfahren wird in der EP 1 302 502 A1 beschrieben, wobei eine Schmelze eines biologisch abbaubaren Polyesters in eine wässrige Emulgatorlösung eingetragen wird.

In der US 10,087,326 B2 wird ein Verfahren beschrieben, bei dem die Schmelze eines biologisch abbaubaren Polymers mit Wasser unter Bildung einer wässrigen Dispersion vermischt wird, und dieser Dispersion eine wässrige Lösung eines Stabilisierungsmittels zugegeben wird. In der JP 2004-204038 A2 wird eine biologisch abbaubare Polymerdispersion beschrieben, welche dadurch erhalten wird, dass ein biologisch abbaubarer Polyester mit einem biologisch abbaubaren Emulgator in einem Schmelzextruder abgemischt wird und in Wasser aufgenommen wird. Nach Abkühlen der wässrigen Dispersion wird ein Vernetzer zugegeben. Aus der EP 0 955 331 A2 ist ein Verfahren zur Herstellung einer wässrigen Dispersion von bioabbaubarem Polyester bekannt, bei dem ein OH-funktioneller Polyester mit einer Polycarbonsäure zur Reaktion gebracht wird, und das damit erhaltene Produkt in ein Lösungmittel aufgenommen wird, und nach Neutralisation mit Base in Wasser dispergiert wird. In der WO 2015/024759 A1 wird die Herstellung eines redispergierbaren Pulvers eines bioabbaubaren Polyesters beschrieben, bei dem im ersten Schritt ein Polyestergranulat mit einem Weichmacher, beispielsweise Polyethylenglykol abgemischt wird und diese Mischung mit einer wässrigen Polyvinylalkohol-Lösung abgemischt wird, und das Dispersionspulver mittels Filtration und Trocknung gewonnen wird. In der WO2013/042677 wird eine wässrige Dispersion eines biologisch abbaubaren Polyesters offenbart, wobei der Polyester aus der Reaktion eines biologisch abbaubaren Polylactids und Polyethylenglykol in Gegenwart eines Katalysators, gegebenenfalls in Gegenwart eines multifunktionellen Alkohols, wie Glycerin oder Trimethylolpropan, erhalten wird.

Der Erfindung lag die Aufgabe zugrunde eine wässrige Dispersion eines biologisch abbaubaren Polyesters zur Verfügung zu stellen ohne die obengenannten Nachteile bei der Scherung einer Schmelze des Polyesters in eine wässrige Emulgator- oder Schutzkolloid-Lösung.

Gegenstand der Erfindung ist eine wässrige Dispersion eines biologisch abbaubaren Polyesters, welche erhalten wird mittels Umesterung eines biologisch abbaubaren Polyesters aus der Gruppe bestehend aus Polyhydroxybutyrate (PHB), Polyhydroxybutyrat-co-valeriat (PHBV), Polybutylen-Adipat-Terephthalat (PBAT), Polybutylensuccinat (PBS), Polybutylensuccinat-co-adipat (PBSA) und deren Gemische mit einem Polymer aus der Gruppe der Polyethylenglykole, der PEO-PPO-Blockcopolymerisate, der Polyethylenglykolether mit einem aliphatischen, verzweigten oder unverzweigtem Polyol mit 3 bis 6 C-Atomen und 2 bis 6 OH-Gruppen, gegebenenfalls in Gegenwart einer ethylenisch ungesättigten Dicarbonsäure oder deren Anhydrid und/oder gegebenenfalls in Gegenwart von einem mehrwertigen Alkohol, und Dispergieren der Schmelze des damit erhaltenen Produkts in Wasser.

Unter biologisch abbaubaren Polyestern sind solche zu verstehen, welche das Kriterium der biologischen Abbaubarkeit gemäß der DIN-Norm EN 13432:2000 erfüllen. Das ist gemäß EN 13432:200 Abschnitt 3.4 "die Zerlegung durch Mikroorganismen in Gegenwart von Sauerstoff in Kohlendioxid, Wasser und Salze anderer vorhandener Elemente (Mineralisation) unter Bildung neuer Biomasse oder in Abwesenheit von Sauerstoff in Kohlenstoffdioxid, Methan, Mineralsalze und neue Biomasse".

Als biologisch abbaubare Polyester geeignet sind Polyhydroxybutyrat (PHB), Polyhydroxybutyrat-co-valeriat (PHBV), Polybutyrat-Adipat-Terephthalat (PBAT), Polybutylensuccinat (PBS), Polybutylensuccinat-co-adipat (PBSA) und deren Gemische. Bevorzugt werden Polybutylensuccinat (PBS), Polybutylensuccinat-co-adipat (PBSA) und deren Gemische. Geeignete biologisch abbaubare Polyester und deren Herstellung sind dem Fachmann bekannt und im Handel erhältlich.

Geeignete Polymere sind Polyalkylenglykol-Verbindungen beispielsweise lineares Polyethylenglykol (PEO) und PEO-PPO-Blockcopolymerisate und verzweigte Polyethylenglykolether auf Basis Glycerin, Trimethylolpropan oder Pentaerythrit oder Xylitol oder Sorbitol, sowie deren Gemische, jeweils mit einem gewichtsmittleren Molekulargewicht Mw von 1000 bis 10000 g/mol, vorzugsweise 3000 bis 6000 g/mol.

Geeignete ethylenisch ungesättigte Dicarbonsäuren und Dicarbonsäureanhydride (Dicarbonsäurekomponente) sind solche mit jeweils 4 bis 6 C-Atomen und deren Gemische, beispielsweise Fumarsäure, Maleinsäure, Maleinsäureanhydrid, Itaconsäure und deren Gemische. Bevorzugt werden Maleinsäure und Maleinsäureanhydrid und deren Gemische.

Geeignete mehrwertige Alkohole sind lineare oder verzweigte Kohlenwasserstoffe mit 2 bis 6 C-Atomen und 2 bis 6 OH-Gruppen, beispielsweise Glycerin, Trimethylolpropan, Pentaerythrit, Xylit und Sorbitol, welche gegebenenfalls als Vernetzer eingesetzt werden können.

Zur Umesterung des biologisch abbaubaren Polyesters mit der Polymer-Komponente werden die beiden Komponenten zunächst in Form ihrer Schmelzen vermischt und in Gegenwart eines Umesterungskatalysators zur Reaktion gebracht. Das molare Mischungsverhältnis von Estergruppen des Polyesters zu Ethylenglykolgruppen der Polymer-Komponente beträgt im Allgemeinen von 1 : 0,1 bis 1 : 10, vorzugsweise 1 : 1,5 bis 1 : 2,5.

Der zur Dispergierung bevorzugte HLB-Wert ergibt sich aus dem Molgewicht des Polyethers und dem rechnerischen mittleren Molgewicht der Polyesterbruchstücke und soll nach der Formel von Griffin et al.:

$$HLB = 20*(1-M[Polyesterbruchstück]/M[Polyesterbruchstück]+M[PEG])$$

zwischen 8 und 18 besonders bevorzugt zwischen 10 und 13 liegen.

[Griffin, William C. (1949), "Classification of Surface-Active Agents by 'HLB'", J. Soc. Cosmetic Chem., 1(5), p.311-26, und Griffin, William C. (1954), "Calculation of HLB Values of Non-Ionic Surfactants", J. Soc. Cosmetic Chem., 5(4), p. 249-56]

Zur Umesterung wird die im ersten Schritt erhaltene Schmelze mit einem Umesterungs-Katalysator versetzt und das Gemisch 1 Stunde bis 12 Stunden, vorzugsweise 4 bis 7 Stunden, oberhalb der Schmelztemperatur gehalten. Bevorzugt bei Temperaturen der Schmelze von 110 - 200°C besonders bevorzugt bei 130 - 160°C.

Geeignete Umesterungs-Katalysatoren sind dem Fachmann bekannt und industriell verfügbar. Beispielsweise Titanalkoholate $Ti(OR)_4$ mit einem $C_1$- bis $C_4$-Alkylrest oder Zinkcarboxylate mit einer $C_2$ bis $C_6$-Carboxylgruppe wie Zinkacetat. Besonders bevorzugt werden Titan-tetraisopropoxid (TIP) und Zink(II)acetat. Die Einsatzmengen für den Umesterungskatalysator sind dem Fachmann bekannt und betragen im Allgemeinen 0,1 bis 5 Mol-%, vorzugsweise 0,5 bis 2,0 Mol-%, jeweils bezogen auf den Polyester-Anteil.

In einer bevorzugten Ausführungsform wird im Mischungsschritt zur Mischung von biologisch abbaubarem Polyester und Polymer-Komponente noch eine ungesättigte Dicarbonsäure oder deren Anhydrid zugegeben. Die Dicarbonsäure-Komponente wird vorzugsweise in einem molaren Verhältnis der OH-Gruppen der Polymer-Komponente zur Dicarbonsäurekomponente von 1 : 1 bis 1 : 0,01, besonders bevorzugt von 1 : 0,25 bis 1 : 0,75 zugegeben.

Die Dicarbonsäurekomponente kann direkt zugegeben werden. Vorzugsweise wird die Dicarbonsäure-Komponente mit der Polymer-Komponente und/oder dem mehrwertigen Alkohol sowie deren Gemische, vorverestert. Mit dieser Ausführungsform können reaktive Bausteine mit Doppelbindung mittels Veresterung eingeführt werden.

Nach Beendigung des Umesterungsschrittes wird die Schmelze in Wasser dispergiert. Vorzugsweise wird die Schmelze zur Erleichterung der Dispergierung in heißes Wasser mit einer Temperatur von 50°C bis 95°C emulgiert. Zur Dispergierung kann die Schmelze in bekannter Weise mit einem Hochschermodul, beispielsweise einem Stator-Rotor-Mischer wie einem Ultraturrax T-50 der Firma IKA, einem Unimix Labormischer Typ LM 6 der Firma Haagen & Rinau, oder kontinuierlichen Durchflußscheraggregaten wie dem Ytron-Z Homogenisator oder den Aggregaten der Firma INDAG, in der Wasserphase dispergiert werden. Vorzugsweise mit Scherraten von 3000 - 20000 UPM, besonders bevorzugt mit Scherraten von 8000 - 12000 UPM.

Erfindungsgemäß enthält die wässrige Dispersion keine oberflächenaktiven Additive wie Emulgatoren oder Schutzkolloide. Nach dem Abkühlen wird eine biologisch abbaubare Polyesterdispersion erhalten, vorzugsweise mit einem gewichtsmittleren Teilchendurchmesser dw von < 60 μm und einem Festgehalt von bis zu 50 Gew.-%.

Die mit der ungesättigten Dicarbonsäurekomponente eingeführte Doppelbindung kann in weiterer Folge zur Verbesserung anwendungstechnischer Eigenschaften der Polyesterdispersion durch Vernetzung und/oder Funktionalisierung genutzt werden. Beispielsweise kann durch Zugabe von Oxidationsmitteln, wie organischen Peroxiden, Salzen der Peroxodischwefelsäure, Wasserstoffperoxid und Azoverbindungen, zur damit erhaltenen biologisch abbaubaren Polyesterdispersion die Eigenschaft der damit erhaltenen Filme optimiert werden.

Mit dem erfindungsgemäßen Verfahren wird der Schmelzpunkt und die Viskosität der Schmelze des Polyesters durch die Umesterung mit der Polymer-Komponente signifikant abgesenkt. Überraschenderweise wurde gefunden, dass diese niedrigviskose Schmelze ohne Zugabe von weiteren Hilfsmitteln wie Weichmacher, Emulgator oder Schutzkolloid alleine mittels Scherung, beispielsweise mit einem Stator/Rotor-Aggregat, in eine stabile wässrige Dispersion überführt werden kann.

Die Modifizierung des Polyesters mit Polyalkylenglykol hat zusätzlich den Vorteil, dass mittels Variation der Menge des Polyalkylenglykols oder mittels Variation des Molekulargewichts des zur Umesterung eingesetzten Polyalkylenglykols die physikalischen Eigenschaften der Dispersion, beispielsweise Viskosität und Mindestfilmbildetemperatur, und die physikalischen und mechanischen Eigenschaften der aus der Trocknung der Polyesterdispersion resultierenden Filme, beispielsweise Kohäsion und Adhäsion, über einen weiten Bereich variiert werden können. Mit höheren Einsatzmengen an Polyalkylenglykol kann die Hydrophilie der Polymerfilme erhöht werden, deren Härte abgesenkt werden und die Bindung zur Cellulosefaser verbessert werden. Eine zusätzliche Verbesserung der Bindemittelqualität der Polyesterdispersion wird mittels der Modifikation mit ungesättigten Dicarbonsäuren und deren Derivaten erhalten.

Die erfindungsgemäßen biologisch abbaubaren, wässrigen Polyesterdispersionen eignen sich vorzugsweise als Bindemittel für Beschichtungsmittel wie Anstrichfarben oder Papier/Kartonagen-Beschichtung, als Bindemittel in Klebstoffen wie Holzleim, und als Bindemittel zur Herstellung von textilen Flächengebilden wie Nonwovens oder Teppichbelägen.

Die nachfolgenden Beispiele dienen der weiteren Erläuterung der Erfindung.

Beschreibung der Testmethoden:

Molekulargewicht:

Die gewichtsmittlere Molmasse $M_w$ und das zahlenmittlere Molekulargewicht $M_n$ wurden mittels GPC bestimmt (kalibriert gegen Polyethylenglykol-Standard; THF als Elutionsmittel; ELSD-Detektor).

Festgehalt:

Bestimmung gemäß DIN EN ISO 3251 im Trockenschrank für 20 min bei 150°C.

Gewichtsmittlerer Teilchendurchmessser (dw):

Die gewichtsmittlere Partikelgröße dw und die Partikelgrößenverteilung PSD wurden mit dem Messgerät Beckmann Coulter® LS 13320 nach Gerätevorschrift bestimmt.

Schmelzviskosität $\eta_s$:

Gemessen nach 6h bei 160° auf einem Rheometer der Marke Malvern Bohlin CVO 120;Messsystem: Platte-Platte, Durchmesser 25mm.

Brookfield-Viskosität $\eta$:

Die Bestimmung der Brookfield-Viskositäten der wässrigen Polymerdispersionen erfolgte mit einem Brookfieldviskosimeter, nach Temperierung auf 20°C, unter Verwendung von Spindel 2 bei 20 Umdrehungen pro Minute.

Beispiele zur Herstellung der modifizierten Polyester:

Beispiel 1: In einem Labor Polymerkneter (Modell T219 der Firma Werner & Pfleiderer) wurden 0,5 kg Polybutylensuccinat-co-adipat (PBSA FD 22 PB der Firma PTT MCC Biochem Company LDT) und 0,5 kg Polyethylenglykol (PEG 6000 der Firma Merck/Sigma Aldrich) miteinander bei 150°C aufgeschmolzen, 25 g Titan(IV)tetraisopropoxid zugefügt und durchmischt. Im Laufe von 7h fiel die Schmelzviskosität dadurch deutlich und aus zwei separaten Eduktpeaks in der GPC wurde ein Peak entsprechend gemittelter Molmasse. (siehe Tabelle 1)

Beispiel 2: In einem Labor Polymerkneter (Modell T219 der Firma Werner & Pfleiderer) wurden 0,5 kg Polybutylensuccinat-co-adipat (PBSA FD 22 PB der Firma PTT MCC Biochem Company LDT) und 0,5 kg Polyethylenglykol (PEG 6000 der Firma Merck/Sigma Aldrich) miteinander bei 150°C aufgeschmolzen und unter Durchmischung 10 g wasserfreies Zink(II)acetat zugefügt. Im Laufe von 7h fiel die Schmelzviskosität dadurch deutlich und aus zwei separaten Eduktpeaks in der SEC wurde ein Peak entsprechend gemittelter Molmasse. (siehe Tabelle 1)

Beispiel 3: In einem Labor Polymerkneter (Modell T219 der Firma Werner & Pfleiderer) wurden 0,5 kg Polybutylensuccinat-co-adipat (PBSA FD 22 PB der Firma PTT MCC Biochem Company LDT) und 0,5 kg Polyethylenglykol (PEG 3000 der Firma Merck/Sigma Aldrich) miteinander bei 150°C aufgeschmolzen und unter Durchmischung 25 g Titan(IV)tetraisopropoxid zugefügt. Im Laufe von 7h fiel die Schmelzviskosität dadurch deutlich und aus zwei separaten Eduktpeaks in der SEC wurde ein Peak entsprechend gemittelter Molmasse. (siehe Tabelle 1)

Beispiel 4: In einem Labor Polymerkneter (Modell T219 der Firma Werner & Pfleiderer) wurden 0,833 kg Polybutylensuccinat-co-adipat (PBSA FD 22 PB der Firma PTT MCC Biochem Company LDT) und 0,666 kg Polyethylenglykol (PEG 3000 der Firma Merck/Sigma Aldrich) miteinander bei 150°C aufgeschmolzen und unter Durchmischung 15 g wasserfreies Zink(II)acetat zugefügt. Im Laufe von 7h fiel die Schmelzviskosität dadurch deutlich und aus zwei separaten Eduktpeaks in der SEC wurde ein Peak entsprechend gemittelter Molmasse. (siehe Tabelle 1)

Beispiel 5: In einem 2l Glasreaktor mit Heizmantel und Kammrührer wurden 0,5 kg Polybutylensuccinat-co-adipat (PBSA FD 22 PB der Firma PTT MCC Biochem Company LDT), 0,5 kg Polyethylenglykol (PEG 6000 der Firma Merck/Sigma Aldrich) und 6,6 g wasserfreies Zink(II)acetat miteinander bei 150°C aufgeschmolzen und unter moderater Rührung 9,8 g Maleinsäureanhydrid zugefügt. Im Laufe von 5h unter Rührung im Wasserstrahlvakuum fiel die Schmelzviskosität dadurch deutlich und aus zwei separaten Eduktpeaks in der SEC wurde ein Peak entsprechend gemittelter Molmasse. (siehe Tabelle 1)

Beispiel 6: In einem 2l Glasreaktor mit Heizmantel und Kammrührer wurden 0,75 kg Polybutylensuccinat (PBS FD 92 der Firma PTT MCC Biochem Company LDT), 0,75 kg Polyethylenglykol (PEG 6000 der Firma Merck/Sigma Aldrich) und 15 g wasserfreies Zink(II)acetat miteinander bei 150°C aufgeschmolzen. Im Laufe von 5h unter Rührung im Wasserstrahlvakuum fiel die Schmelzviskosität dadurch deutlich und aus zwei separaten Eduktpeaks in der GPC wurde ein Peak entsprechend gemittelter Molmasse. (siehe Tabelle 1)

Beispiel 7: In einem 2l Glasreaktor mit Heizmantel und Kammrührer wurden 0,75 kg Polybutylensuccinat (PBS FD 92 der Firma PTT MCC Biochem Company LDT), 0,75 kg Polyethylenglykol (PEG 6000 der Firma Merck/Sigma Aldrich) und 15 g wasserfreies Zink(II)acetat miteinander bei 150°C aufgeschmolzen und unter moderater Rührung 25 g Maleinsäureanhydrid zugefügt. Im Laufe von 5h unter Rührung im Wasserstrahlvakuum fiel die Schmelzviskosität dadurch deutlich und aus zwei separaten Eduktpeaks in der GPC wurde ein Peak entsprechend gemittelter Molmasse. (siehe Tabelle 1)

Beispiel 8: In einem 2l Glasreaktor mit Heizmantel und Kammrührer wurden 0,75 kg Polybutylenterephtalat-co-coadibat (PBAT Ecoflex C1200 der Firma BASF), 0,75 kg Polyethylenglykol (PEG 6000 der Firma Merck/Sigma Aldrich) und 15 g wasserfreies Zink(II)acetat miteinander bei 150°C aufgeschmolzen. Im Laufe von 5h unter Rührung im Wasserstrahlvakuum fiel die Schmelzviskosität dadurch deutlich und aus zwei separaten Eduktpeaks in der GPC wurde ein Peak entsprechend gemittelter Molmasse. (siehe Tabelle 1)

Die nachfolgende Tabelle 1 listet die charakteristischen Molekulargewichte Mw und Mn der erfindungsgemäß modifizierten Polyester und beispielhaft einige der entsprechenden Schmelzviskositäten:

Tabelle 1:

|  | $\eta_s$ [mPa*s] Start | $\eta_s$ [mPa*s] 6h | Mw [Da] | Mn [Da] |
|---|---|---|---|---|
| PBSA FD 22 PB | 924000 | 80000 | 60600 | 29510 |
| PBS FD 92 |  |  | 76600 | 20100 |
| PBAT C 1200 |  |  | 47900 | 17300 |
| PEG 3000 |  |  | 2830 | 2609 |
| PEG 6000 | 900 | 150 | 5900 | 5700 |
| Beispiel 1 | 2160 | 230 | 9500 | 3900 |
| Beispiel 2 | 5500 | 285 | 9000 | 3800 |
| Beispiel 3 | 7920 | 270 | 7100 | 3200 |
| Beispiel 4 |  |  | 8400 | 4100 |
| Beispiel 5 |  |  | 10600 | 5400 |
| Beispiel 6 |  |  | 12344 | 5851 |
| Beispiel 7 |  |  | 11396 | 5417 |
| Beispiel 8 |  |  | 9000 | 4700 |

Generelle Vorschrift zur Herstellung der Polyester-Dispersionen:
In einem 2L Stahlgefäß wurden 800 ml Wasser mit einer Temperatur von 95°C vorgelegt. Unter Scherung von 5000 U/min mittels eines IKA - Ultraturrax T 50 mit einem IKA S 50 N - G 45 G Dispergierwerkzeug wurde die dem Festgehalt in Tabelle 2 entsprechende Menge der dem jeweiligen Beispiel entsprechenden, auf 150°C erhitzten, Polyesterschmelze langsam zugegossen.

Die dabei entstandene Dispersion wurde für 10 Minuten mit einer Umdrehungsgeschwindigkeit von 8000 - 10000 U/min geschert und dann zum Abkühlen auf Raumtemperatur stehen gelassen. Die erkaltete Dispersion wurde durch einen 50 μm Filterstrumpf abgefüllt.

Die nachfolgende Tabelle zeigt beispielhaft charakteristische Kriterien der erfindungsgemäßen wässrigen Dispersionen der modifizierten biologisch abbaubaren Polyester, wie Feststoffgeht FG in Gewichtsprozent [% w/w], Partikelgrößenverteilung PSD sowie die Brookfieldviskosität gemessen bei 20°C mit der Spindel 2 bei 20 U/min in mPa*s.

Tabelle 2:

| dispergierter Ester entsprechend | FG [% w/w] | PSD [μm] (Mittelwert) | η [mPa*s] Spindel 2(20 UPM) |
|---|---|---|---|
| Beispiel 1 | 24,5 | 0,2/10 | 46 |
| Beispiel 2 | 29,7 | 0,1/2,4 | 36 |
| Beispiel 3 | 31 | 12,46 | 170 |
| Beispiel 4 | 20 | 5,7/11,36 | 26 |
| Beispiel 5 | 30 | 10 | 467 |
| Beispiel 6 | 25,7 | 4,1 | 172 |
| Beispiel 7 | 20 | 5,2/9,5 | 68 |
| Beispiel 8 | 29, 7 | 0,1/2,136 | 526 |

**Patentansprüche**

1. Wässrige Dispersion eines biologisch abbaubaren Polyesters, welche erhalten wird mittels Umesterung eines biologisch abbaubaren Polyesters aus der Gruppe bestehend aus Polyhydroxybutyrat (PHB), Polyhydroxybutyrat-covaleriat (PHBV), Polybutylen-Adipat-Terephthalat (PBAT), Polybutylensuccinat (PBS), Polybutylensuccinat-co-adipat (PBSA) und deren Gemische

   mit einem Polymer aus der Gruppe der Polyethylenglykole, der PEO-PPO-Blockcopolymerisate, der Polyethylenglykolether mit einem aliphatischen, verzweigten oder unverzweigtem Polyol mit 3 bis 6 C-Atomen und 2 bis 6 OH-Gruppen,
   gegebenenfalls in Gegenwart einer ethylenisch ungesättigten Dicarbonsäure oder deren Anhydrid, und/oder gegebenenfalls in Gegenwart von einem mehrwertigen Alkohol, und Dispergieren der Schmelze des damit erhaltenen Produkts in Wasser.

2. Wässrige Dispersion nach Anspruch 1, **dadurch gekennzeichnet, dass** zur Umesterung ein Polyester aus der Gruppe umfassend Polybutylensuccinat (PBS), Polybutylensuccinat-co-adipat (PBSA) und deren Gemische eingesetzt wird.

3. Wässrige Dispersion nach Anspruch 1 oder 2, **dadurch gekennzeichnet, dass** zur Umesterung ein Polymer aus der Gruppe umfassend Polyethylenglykol (PEO), PEO-PPO-Blockcopolymerisate, Polyethylenglykolether mit Glycerin oder Pentaerythrit oder Xylitol oder Sorbitol, und deren Gemische, jeweils mit einem gewichtsmittleren Molekulargewicht Mw von 3000 bis 10000 g/mol (Bestimmung mittels GPC (kalibriert gegen Polyethylenglykol-Standard; THF als Elutionsmittel; ELSD-Detektor)), eingesetzt werden.

4. Wässrige Dispersion nach Anspruch 1 bis 3, **dadurch gekennzeichnet, dass** die Umesterung in Gegenwart einer Dicarbonsäure aus der Gruppe umfassend ethylenisch ungesättigte Dicarbonsäuren und Dicarbonsäureanhydride mit jeweils 4 bis 6 C-Atomen und deren Gemische erfolgt.

5. Wässrige Dispersion nach Anspruch 1 bis 4, **dadurch gekennzeichnet, dass** die Umesterung in Gegenwart von einem oder mehreren mehrwertigen Alkoholen mit 2 bis 6 C-Atomen und 2 bis 6 OH-Gruppen erfolgt.

6. Verfahren zur Herstellung einer wässrigen Dispersion nach Anspruch 1 bis 5, **dadurch gekennzeichnet, dass** zur Umesterung des biologisch abbaubaren Polyesters mit der Polymer-Komponente die beiden Komponenten zunächst in Form deren Schmelzen vermischt werden und in Gegenwart eines Umesterungs-Katalysators umgeestert werden, und nach Beendigung des Umesterungsschrittes die Schmelze in Wasser dispergiert wird.

7. Verfahren nach Anspruch 6, **dadurch gekennzeichnet, dass** im Mischungsschritt zur Mischung von biologisch abbaubarem Polyester und Polymer-Komponente noch eine ungesättigte Dicarbonsäurekomponente und/oder ein mehrwertiger Alkohol zugegeben wird.

8. Verfahren nach Anspruch 5 bis 7, **dadurch gekennzeichnet, dass** die damit erhaltene wässrige Dispersion eines ungesättigten biologisch abbaubaren Polyesters durch Zugabe eines Oxidationsmittels vor deren Verwendung modifiziert wird.

9. Verwendung der Dispersionen nach Anspruch 1 bis 4 oder der Verfahrensprodukte nach Anspruch 5 bis 6 als Bindemittel für Beschichtungsmittel wie Anstrichfarben oder Papieroder Kartonagenbeschichtungen, als Bindemittel in Klebstoffen wie Holzleim, und als Bindemittel zur Herstellung von textilen Flächengebilden wie Nonwovens und Teppichböden.

## Claims

1. Aqueous dispersion of a biodegradable polyester, said dispersion being obtained by transesterification of a biodegradable polyester from the group consisting of polyhydroxybutyrate (PHB), polyhydroxybutyrate-co-valerate (PHBV), polybutylene adipate terephthalate (PBAT), polybutylene succinate (PBS), polybutylene succinate-co-adipate (PBSA) and mixtures thereof with a polymer from the group of polyethylene glycols, PEO-PPO block copolymers and polyethylene glycol ethers with an aliphatic, branched or unbranched polyol having 3 to 6 carbon atoms and 2 to 6 OH groups,

    optionally in the presence of an ethylenically unsaturated dicarboxylic acid or anhydride thereof, and/or optionally in the presence of a polyhydric alcohol, and
    dispersing of the melt of the resultant product in water.

2. Aqueous dispersion according to Claim 1, **characterized in that** the transesterification is carried out using a polyester from the group encompassing polybutylene succinate (PBS), polybutylene succinate-co-adipate (PBSA) and mixtures thereof.

3. Aqueous dispersion according to Claim 1 or 2, **characterized in that** the transesterification is carried out using a polymer from the group encompassing polyethylene glycol (PEO), PEO-PPO block copolymers, polyethylene glycol ethers with glycerol or pentaerythritol or xylitol or sorbitol, and mixtures thereof, in each case having a weight-average molecular weight Mw of 3000 to 10 000 g/mol (determined via GPC (calibrated against polyethylene glycol standard; THF as eluent; ELSD detector)).

4. Aqueous dispersion according to Claims 1 to 3, **characterized in that** the transesterification takes place in the presence of a dicarboxylic acid from the group encompassing ethylenically unsaturated dicarboxylic acids and dicarboxylic anhydrides having in each case 4 to 6 carbon atoms and mixtures thereof.

5. Aqueous dispersion according to Claims 1 to 4, **characterized in that** the transesterification takes place in the presence of one or more polyhydric alcohols having 2 to 6 carbon atoms and 2 to 6 OH groups.

6. Process for preparing an aqueous dispersion according to Claims 1 to 5, **characterized in that** for the transesterification of the biodegradable polyester with the polymer component, the two components are first mixed in the form of their melts and subjected to transesterification in the presence of a transesterification catalyst, and, after the end of the transesterification step, the melt is disposed in water.

7. Process according to Claim 6, **characterized in that** in the mixing step, an unsaturated dicarboxylic acid component and/or a polyhydric alcohol are/is added to the mixture of biodegradable polyester and polymer component.

8. Process according to Claims 5 to 7, **characterized in that** the resultant aqueous dispersion of an unsaturated biodegradable polyester is modified by addition of an oxidizing agent before the dispersion is used.

9. Use of the dispersions according to Claims 1 to 4 or of the process products according to Claims 5 to 8 as binders for coating materials such as paints or paper coatings or cardboard-packaging coatings, as binders in adhesives such as wood glue, and as binders for producing sheet-like textile structures such as nonwovens and carpets.

**Revendications**

1. Dispersion aqueuse d'un polyester biodégradable, qui est obtenue par transestérification d'un polyester biodégradable du groupe constitué par le polyhydroxybutyrate (PHB), le polyhydroxybutyrate-co-valériate (PHBV), le poly(butylène-adipate-téréphtalate) (PBAT), le poly(succinate de butyle) (PBS), le poly(succinate-co-adipate de butyle) (PBSA) et leurs mélanges avec un polymère du groupe des polyéthylèneglycols, des copolymères séquencés de POE-POP, des polyéthylèneglycoléthers comprenant un polyol aliphatique, ramifié ou non ramifié comprenant 3 à 6 atomes de carbone et 2 à 6 groupes OH, le cas échéant en présence d'un acide dicarboxylique éthyléniquement insaturé ou de son anhydride et/ou le cas échéant en présence d'un alcool polyvalent, et par dispersion de la masse fondue du produit ainsi obtenu dans de l'eau.

2. Dispersion aqueuse selon la revendication 1, **caractérisée en ce qu'**on utilise, pour la transestérification, un polyester du groupe comprenant le poly(succinate de butylène) (PBS), le poly(succinate-co-adipate de butylène) (PBSA) et leurs mélanges.

3. Dispersion aqueuse selon la revendication 1 ou 2, **caractérisée en ce qu'**on utilise, pour la transestérification, un polymère du groupe comprenant le polyéthylèneglycol (PEO), les copolymères séquencés de POE-POP, les polyéthylèneglycoléthers comprenant du glycérol ou du pentaérythritol ou du xylitol ou du sorbitol, et leurs mélanges, présentant à chaque fois un poids moléculaire moyen en poids Mw de 3000 à 10.000 g/mole (détermination par CPG (étalonnage par rapport au polyéthylèneglycol en tant que référence ; THF comme éluant ; détecteur ELSD)).

4. Dispersion aqueuse selon les revendications 1 à 3, **caractérisée en ce que** la transestérification a lieu en présence d'un acide dicarboxylique du groupe comprenant les acides dicarboxyliques éthyléniquement insaturés et les anhydrides d'acides carboxyliques éthyléniquement insaturés comprenant à chaque fois 4 à 6 atomes de carbone et leurs mélanges.

5. Dispersion aqueuse selon les revendications 1 à 4, **caractérisée en ce que** la transestérification a lieu en présence d'un ou de plusieurs alcools polyvalents comprenant 2 à 6 atomes de carbone et 2 à 6 groupes OH.

6. Procédé pour la préparation d'une dispersion aqueuse selon les revendications 1 à 5, **caractérisé en ce que**, pour la transestérification du polyester biodégradable avec le composant polymère, les deux composants sont d'abord mélangés sous forme de leurs masses fondues et transestérifiés en présence d'un catalyseur de transestérification et la masse fondue est dispersée dans de l'eau après la fin de l'étape de transestérification.

7. Procédé selon la revendication 6, **caractérisé en ce que**, dans l'étape de mélange destinée à mélanger le polyester biodégradable et le composant polymère, un composant acide dicarboxylique insaturé et/ou un alcool polyvalent est/sont encore ajouté(s).

8. Procédé selon les revendications 5 à 7, **caractérisé en ce que** la dispersion aqueuse d'un polymère biodégradable insaturé obtenue à l'aide de ce procédé est modifiée avant son utilisation par ajout d'un agent d'oxydation.

9. Utilisation des dispersions selon les revendications 1 à 4 ou des produits de procédé selon les revendications 5 à 8 comme liant pour des agents de revêtement tels que des peintures ou des revêtements de papier ou de carton, comme liant dans des adhésifs tels que la colle à bois et comme liant pour la fabrication de structures planes textiles telles que des non-tissés et des moquettes.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1302502 A1
- US 10087326 B2
- JP 2004204038 A
- EP 0955331 A2
- WO 2015024759 A1
- WO 2013042677 A

**In der Beschreibung aufgeführte Nicht-Patentliteratur**

- **GRIFFIN, WILLIAM C.** Classification of Surface-Active Agents by 'HLB. *J. Soc. Cosmetic Chem.,* 1949, vol. 1 (5), 311-26
- **GRIFFIN, WILLIAM C.** Calculation of HLB Values of Non-Ionic Surfactants. *J. Soc. Cosmetic Chem.,* 1954, vol. 5 (4), 249-56